# EUROPEAN PATENT APPLICATION

(11) **EP 4 704 217 A2**
(43) Date of publication of application: **04.03.2026**
(21) Application number: 25191419.8
(22) Date of filing: 23.07.2025
(51) Int. Cl.: H01M 10/48, H01M 10/613, H01M 10/6556, H01M 50/204, H01M 10/633

(54) **BATTERY MODULE ABNORMALITY DETECTION DEVICE AND BATTERY PACK INCLUDING THE SAME**

(30) Priority: 03.09.2024 KR 20240119363
(71) Applicant: SAMSUNG SDI CO., LTD., Yongin-si, Gyeonggi-do 17084 (KR)
(72) Inventor: KIM, Jinbeom, 17084 Yongin-si (KR); KIM, Daae, 17084 Yongin-si (KR)
(74) Representative: Marks & Clerk LLP

(57) **Abstract**

Provided is a battery module abnormality detection device for detecting an abnormality in a battery module, the battery module including a battery group in which a plurality of battery cells are arranged, and a cooling unit including a coolant pipe arranged on one surface of the battery group to extend in a direction in which the plurality of battery cells are arranged, wherein the battery module abnormality detection device includes a first temperature sensor configured to measure temperature values of battery cells arranged adjacent to an inlet portion of the coolant pipe, a second temperature sensor configured to measure temperature values of battery cells arranged adjacent to an outlet portion of the coolant pipe, and a control unit configured to detect an abnormal state of the battery module by using the temperature values measured by the first temperature sensor and the temperature values measured by the second temperature sensor.

## Description

### BACKGROUND

### 1. Field

The present disclosure relates to a battery module abnormality detection device, and a battery pack including the same.

### 2. Description of the Related Art

Secondary batteries are rechargeable unlike non-rechargeable primary batteries.

Low-capacity secondary batteries are used in small, portable electronic devices such as smart phones, feature phones, laptop computers, digital cameras, or camcorders, while large-capacity secondary batteries are widely used as power sources for driving motors in hybrid cars, electric cars, and as power storage batteries.

By detecting abnormal states in the components of secondary batteries during their production or operation stages, the production efficiency of secondary batteries can be improved, and the safety thereof may be enhanced.

The above-described information is only for enhancement of understanding of the background of the present disclosure, and thus may contain information that does not constitute the related art.

### SUMMARY

The present disclosure provides a device capable of detecting an abnormal state of a battery module, and a battery pack including the device.

However, the objectives of the present disclosure are not limited to the foregoing, and other unmentioned objectives would be clearly understood by those of skill in the art from the following description.

According to an aspect of the present disclosure, a battery module abnormality detection device for detecting an abnormality in a battery module including a battery group in which a plurality of battery cells are arranged, and a cooling unit including a coolant pipe arranged on one surface of the battery group to extend in a direction in which the plurality of battery cells are arranged, includes a first temperature sensor configured to measure temperature values of battery cells arranged adjacent to an inlet portion of the coolant pipe, a second temperature sensor configured to measure temperature values of battery cells arranged adjacent to an outlet portion of the coolant pipe, and a control unit configured to detect an abnormal state of the battery module by using the temperature values measured by the first temperature sensor and the temperature values measured by the second temperature sensor.

In the present embodiment, the control unit may detect the abnormal state of the battery module by using a first difference value, which is a difference between a temperature value measured by the first temperature sensor at a preset time point, and a temperature value measured by the second temperature sensor at the preset time point.

In the present embodiment, the control unit may detect the abnormal state of the battery module by comparing the first difference value with at least one reference value that defines a stable range or a dangerous range, determine, based on the first difference value falling within the stable range, a state of the battery module as a stable state, and determine, based on the first difference value falling within the dangerous range, the state of the battery module as an abnormal state.

In the present embodiment, the dangerous range may include a first dangerous section corresponding to an abnormal state of the cooling unit, and a second dangerous section corresponding to an abnormal state of the battery cell.

In the present embodiment, the control unit may detect the abnormal state of the battery module by using a second difference value, which is a difference between a change amount in temperature values measured by the first temperature sensor between a preset first time point and a preset second time point, and a change amount in temperature values measured by the second temperature sensor between the first time point and the second time point.

In the present embodiment, the control unit may detect the abnormal state of the battery module by comparing the second difference value with at least one reference value that defines a stable range or a dangerous range, determine, based on the second difference value falling within the stable range, a state of the battery module as a stable state, and determine, based on the second difference value falling within the dangerous range, the state of the battery module as an abnormal state.

In the present embodiment, the dangerous range may include a first dangerous section corresponding to an abnormal state of the battery cell, and a second dangerous section corresponding to an abnormal state of the cooling unit.

According to another aspect of the present disclosure, a battery module abnormality detection device for detecting an abnormality in a battery module including a battery group in which a plurality of battery cells are arranged, and a cooling unit including a coolant pipe arranged on one surface of the battery group to extend in a direction in which the plurality of battery cells are arranged, includes a temperature sensor configured to measure temperature values of battery cells arranged at corresponding positions on the plurality of battery modules, and a control unit configured to detect an abnormal state of at least one of the plurality of battery modules by using the temperature values.

In the present embodiment, the control unit may detect an abnormal state of the battery module by using a first difference value, which is a difference between an average temperature value calculated from the temperature values measured at a preset time point, and a temperature value of a battery cell provided in a preset battery module from among the plurality of battery modules.

In the present embodiment, the control unit may detect the abnormal state of the battery module by comparing the first difference value with at least one reference value that defines a stable range or a dangerous range, determine, based on the first difference value falling within the stable range, a state of the battery module as a stable state, and determine, based on the first difference value falling within the dangerous range, the state of the battery module as an abnormal state.

In the present embodiment, the dangerous range may include a first dangerous section corresponding to an abnormal state of the cooling unit, and a second dangerous section corresponding to an abnormal state of the battery cell.

In the present embodiment, the control unit may detect the abnormal state of the battery module by using a second difference value, which is a difference between an average change amount calculated by using change amounts in the temperature values between a preset first time point and a preset second time point, and a temperature value change amount of a battery cell provided in a preset battery module from among the plurality of battery modules between the first time point and the second time point.

In the present embodiment, the control unit may detect the abnormal state of the battery module by comparing the second difference value with at least one reference value that defines a stable range or a dangerous range, determine, based on the second difference value falling within the stable range, a state of the battery module as a stable state, and determine, based on the second difference value falling within the dangerous range, the state of the battery module as an abnormal state.

In the present embodiment, the dangerous range may include a first dangerous section corresponding to an abnormal state of the cooling unit, and a second dangerous section corresponding to an abnormal state of the battery cell.

According to another aspect of the present disclosure, a battery pack includes a battery module including a battery group in which a plurality of battery cells are arranged, and a cooling unit including a coolant pipe arranged on one surface of the battery group to extend in a direction in which the plurality of battery cells are arranged, and a battery module abnormality detection device, wherein the battery module abnormality detection device includes a first temperature sensor configured to measure temperature values of battery cells arranged adjacent to an inlet portion of the coolant pipe, a second temperature sensor configured to measure temperature values of battery cells arranged adjacent to an outlet portion of the coolant pipe, and a control unit configured to detect an abnormal state of the battery module by using the temperature values measured by the first temperature sensor and the temperature values measured by the second temperature sensor.

At least some of the above and other features of the invention are set out in the claims.

### BRIEF DESCRIPTION OF THE DRAWINGS

The above and other aspects, features, and advantages of certain embodiments of the disclosure will be more apparent from the following description taken in conjunction with the accompanying drawings, in which:

The accompanying drawings illustrate preferred embodiments of the present disclosure, and together with the description of the present disclosure to be provided below, serve to provide further understanding of the technical features of the present disclosure, and therefore, the present disclosure should not be interpreted as being limited to the drawings.
FIG. 1 is a diagram illustrating a battery pack including a battery module abnormality detection device according to an embodiment of the present disclosure;
FIG. 2 is a diagram illustrating a battery module abnormality detection device according to an embodiment of the present disclosure;
FIG. 3 is a graph showing temperature changes of some battery cells over time during a charge/discharge test using a battery module of FIG. 2;
FIG. 4 is a diagram illustrating a battery module abnormality detection device according to another embodiment of the present disclosure;
FIG. 5 is a graph showing temperature changes of some battery cells over time during a charge/discharge test using a plurality of battery modules of FIG. 4;
FIG. 6 is a flowchart showing a battery module abnormality detection method according to an embodiment of the present disclosure;
FIG. 7 is a flowchart showing in detail some operations of the battery module abnormality detection method of FIG. 6;
FIG. 8 is a flowchart showing in detail another embodiment of some operation of the battery module abnormality detection method of FIG. 6;
FIG. 9 is a flowchart showing another embodiment of the battery module abnormality detection method of FIG. 6;
FIG. 10 is a flowchart showing in detail some operations of the battery module abnormality detection method of FIG. 9; and
FIG. 11 is a flowchart showing in detail another embodiment of some operations of the battery module abnormality detection method of FIG. 9.

### DETAILED DESCRIPTION

Hereinafter, preferable embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, embodiments described herein and components illustrated in the drawings are only the most preferred embodiments of the present disclosure and do not represent all aspects of the technical scope of the present disclosure, and thus, it should be understood that various equivalents and modifications that may replace them may be made at the time of filing of the present disclosure.

In addition, it will be further understood that the terms "includes", "comprises" and/or "including", "comprising" used herein specify the presence of stated shapes, numbers, processes, members, components, and/or groups thereof, but do not preclude the presence or addition of one or more other shapes, numbers, operations, members, components, and/or groups thereof.

In addition, in order to help understanding of the present disclosure, the accompanying drawings are not drawn to scale, and the dimensions of some components may be exaggerated. In addition, the same reference numerals may be assigned to the same elements in different embodiments.

When it is described that two objects are 'identical', this means that these objects are 'substantially identical'. Accordingly, the substantially identical objects may include deviations considered low in the art, for example, deviations within 5 %. In addition, when it is described that certain parameters are uniform in a region, this may mean that the parameters are uniform in terms of an average in the corresponding region.

Although the terms 'first', 'second', and the like are used to describe different elements, these elements are not limited by the terms. These terms are used to distinguish one element from another, and unless stated otherwise, a first element may be a second element.

Throughout the specification, unless stated otherwise, each element may be singular or plural.

When an element is referred to as being arranged "above (or under)" or "on (or below)" another element, the element may be arranged on an upper surface (or a lower surface) of the other element, and an intervening element may be arranged between the element and the other element on (or below) the element.

In addition, when an element is referred to as being "connected", "coupled", or "linked" to another element, it should be understood that the element may be directly connected or coupled to the other element, but an intervening element may be "interposed" between the elements, or the elements may be "connected", "coupled", or "linked" to each other through another element. In addition, when a part is referred to as being "electrically coupled" to another part, the part may be directly connected to the other part or may be connected to the other part through an intervening element therebetween.

Throughout the specification, "A and/or B" refers to A, B, or both A and B unless stated otherwise. That is, "and/or" includes all or any combination of the listed items. "C to D" "C to D" refers to at least C and not more than D, unless stated otherwise.

The terminology used herein is for the purpose of describing embodiments of the present disclosure, and is not intended to limit the present disclosure.

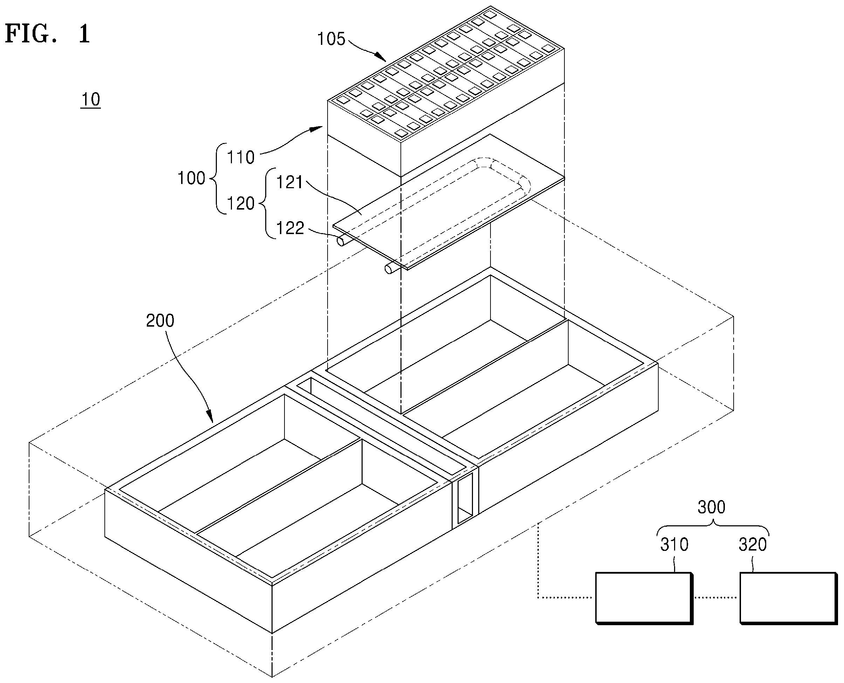

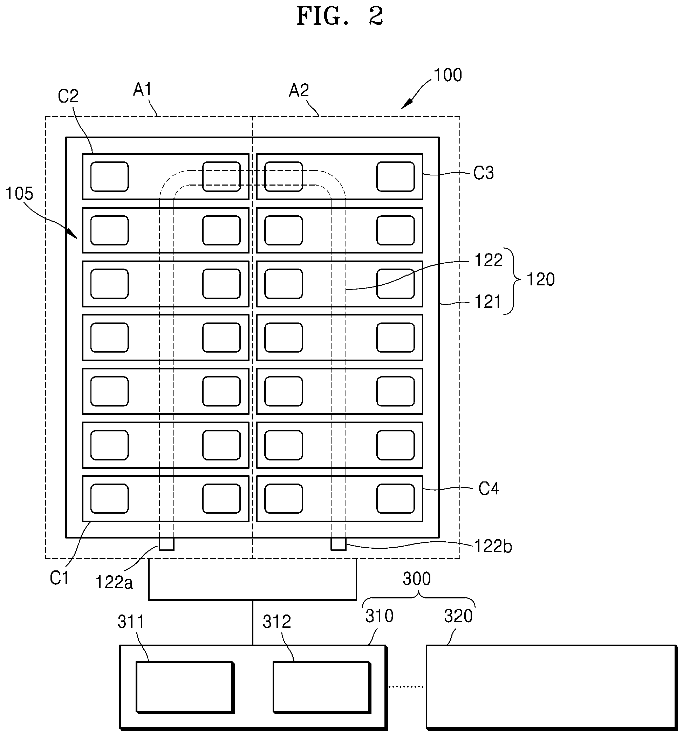

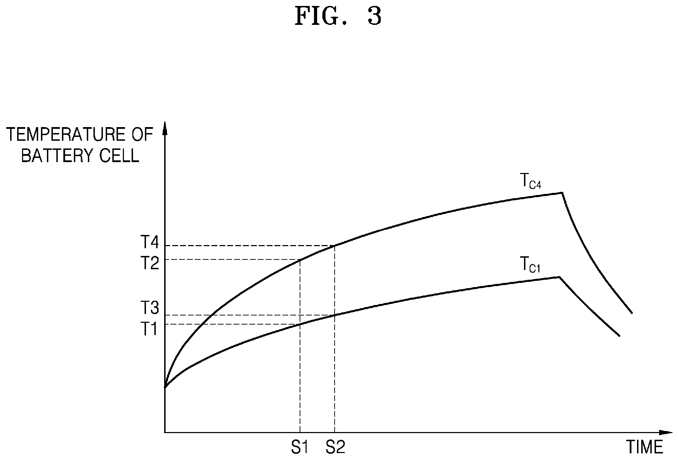

FIG. 1 is a diagram illustrating a battery pack including a battery module abnormality detection device according to an embodiment of the present disclosure, FIG. 2 is a diagram illustrating a battery module abnormality detection device according to an embodiment of the present disclosure, and FIG. 3 is a graph showing temperature changes of some battery cells over time during a charge/discharge test using a battery module of FIG. 2.

A battery pack 10 according to an embodiment of the present disclosure may detect an abnormal state of a battery module 100 by measuring and comparing temperature values of a plurality of battery cells provided in the battery module 100, or by measuring and comparing temperature values of battery cells provided in a plurality of battery modules 100A, 100B, and 100C.

For example, the battery pack 10 may deliver temperature values measured by a temperature sensor 310 to a control unit 320, so as to allow the control unit 320 to compare a plurality of temperature values or compare temperature value change amounts, to detect an abnormal state of the battery module 100 and determine the type of the abnormal state.

Hereinafter, the configuration, operating principle, and effect of the battery pack 10 including a battery module abnormality detection device 300 according to an embodiment of the present disclosure will be described in detail.

Referring to FIG. 1, the battery pack 10 according to an embodiment of the present disclosure may include the battery module 100, a housing 200, and the battery module abnormality detection device 300.

Referring to FIGS. 1 and 2, the battery module 100 may include a battery group 110 and a cooling unit 120.

The battery group 110 may have a plurality of battery cells arranged. The battery group 110 may be a collection of battery cells in a plurality of rows and a plurality of columns.

Referring to FIG. 2, an area where the battery cells of the battery group 110 are arranged may be divided into an inlet area A1 and an outlet area A2.

The inlet area A1 may be defined as an area where the battery cells are arranged relatively closer to an inlet portion 122a of a coolant pipe 122 than an outlet portion 122b with respect to a path formed by the coolant pipe 122 extending through the cooling unit 120, which will be described below, and the outlet area A2 may be defined as an area where the battery cells are arranged relatively closer to the outlet portion 122b of the coolant pipe 122 than the inlet portion 122a, with respect to the path formed by the coolant pipe 122 extending through the cooling unit 120. For example, the battery cells of the battery group are arranged sequentially along the path formed by the coolant pipe 122, and the battery cells that are arranged on the path closer to the inlet portion 122a than the outlet portion 122b are within the inlet area A1 and the battery cells that are arranged on the path closer to the outlet portion 122b than the inlet portion 122a are within the outlet area A2.

Referring to FIG. 2, among a plurality of battery cells arranged in the inlet area A1, a first battery cell C1 may be the battery cell closest to the inlet portion 122a, and a second battery cell C2 may be the battery cell farthest from the inlet portion 122a.

In some embodiments, among a plurality of battery cells arranged in the outlet area A2, a third battery cell C3 may be the battery cell farthest from the outlet portion 122b, and a fourth battery cell C4 may be the battery cell closest to the outlet portion 122b.

Although FIG. 2 illustrates that five battery cells are arranged between the first battery cell C1 and the second battery cell C2, and between the third battery cell C3 and the fourth battery cell C4, this is only an example, and the number and arrangement of battery cells may be appropriately selected as needed.

When heat is generated in a battery cell, for example, during a charge/discharge test, the temperature of a coolant, which sequentially exchanges heat with the battery cells along the coolant pipe 122, gradually increases from the inlet portion 122a to the outlet portion 122b, and thus, the battery cells arranged in the outlet area A2 may have relatively higher temperature values than those of the battery cells arranged in the inlet area A1.

In other words, the first battery cell C1 may have the lowest temperature value within the battery group 110, and the fourth battery cell C4 may have the highest temperature value within the battery group 110.

The battery cells within the battery group 110 may be electrically connected to each other, or may be electrically connected to an external battery module (not shown). For example, the battery cells may be electrically connected to each other by busbars (not shown), or may be electrically connected to an external battery module (not shown) by a connection terminal (not shown).

Referring to FIGS. 1 and 2, the cooling unit 120 may serve to cool the battery group 110 through heat exchange with the battery group 110, and may include a cooling plate 121 and the coolant pipe 122.

Referring to FIG. 1, the cooling plate 121 may be in contact with a lower surface of the battery group 110. The cooling plate 121 may be arranged on the lower surface of the battery group, to be accommodated in the housing 200, which will be described below, together with the battery group 110.

The cooling plate 121 may have formed therein a hollow space in which the coolant pipe 122 may be arranged. For example, the cooling plate 121 may have formed therein a hollow space in a direction in which the coolant pipe 122 extends, such that the coolant pipe 122 may be inserted into the cooling plate 121.

The cooling plate 121 may mediate heat exchange between the coolant pipe 122 and the battery group 110. In some embodiments, the cooling plate 121 may have a shape corresponding to the lower surface of the battery group 110, so as to maximize a contact area with the battery group 110.

Accordingly, the cooling plate 121 may maximize the heat exchange efficiency between the battery group 110 and a coolant flowing in the coolant pipe 122.

Referring to FIG. 1, the coolant pipe 122 may be arranged on one surface of the battery group 110. In some embodiments, the coolant pipe 122 may be inserted into the hollow space formed in the cooling plate 121 arranged on the lower surface of the battery group 110, to be arranged on the lower surface of the battery group 110.

Accordingly, the coolant pipe 122 may come into contact with the battery group 110 through the cooling plate 121, and thus, heat exchange may occur between the coolant flowing in the coolant pipe 122 and the battery group 110.

Referring to FIG. 2, the coolant pipe 122 may include the inlet portion 122a through which a coolant is introduced into the cooling plate 121, and the outlet portion 122b through which the coolant is discharged from the cooling plate 121.

The coolant pipe 122 may be formed to extend in a direction in which the battery cells are arranged, such that the inlet portion 122a and the outlet portion 122b are connected to each other.

For example, the coolant pipe 122 may be formed to extend from the inlet portion 122a on one side of the battery group to the other side, then be bent on the other side, and then extend to be connected to the outlet portion 122b.

Accordingly, the coolant flowing in from the inlet portion 122a may sequentially exchange heat with the battery cells of the battery group 110 in the direction in which the coolant pipe 122 extends.

In other words, the coolant exchanging heat with the battery cells in the outlet area A2 has already undergone heat exchange, and thus may have a relatively higher temperature than the coolant exchanging heat with the battery cells in the inlet area A1.

That is, the amount of heat exchanged between the coolant flowing in the coolant pipe 122 and the battery cells in the outlet area A2 may be less than the amount of heat exchanged between the coolant flowing in the coolant pipe 122 and the battery cells in the inlet area A1.

FIG. 1 illustrates that the coolant pipe 122 is formed in a shape that is bent twice to be in contact with each battery cell of the battery group 110 once, but the shape of the coolant pipe 122 is not limited thereto.

For example, the coolant pipe 122 may be formed in a shape that is bent a plurality of times to be in contact with each battery cell of the battery group 110 a plurality of times.

Although not illustrated in FIG. 1, the cooling unit 120 according to an embodiment of the present disclosure may further include, in addition to the cooling plate 121 and the coolant pipe 122, additional components for efficiently performing heat exchange between the coolant flowing in the coolant pipe 122 and the battery cells of the battery group 110.

For example, the cooling unit 120 may further include a valve for controlling the flow rate of the coolant, a cooling pipe for supplying the coolant to the coolant pipe, a tube for preventing the coolant from leaking, and the like.

Although not illustrated in FIG. 1, the battery module 100 according to an embodiment of the present disclosure may further include an end plate (not shown) that supports the battery group 110, a side plate (not shown), or an external connection terminal (not shown) that mediates electrical connection between battery modules 100.

Referring to FIG. 1, the housing 200 may accommodate the battery group 110 and the cooling unit 120. An accommodation space may be formed in the housing 200 to accommodate the battery group 110 and the cooling unit 120.

A plurality of accommodation spaces may be formed in the housing 200 to accommodate the plurality of battery modules 100A, 100B, and 100C, and the cooling unit 120.

The accommodation space formed in the housing 200 may have a shape corresponding to the battery group 110. Accordingly, the battery group 110 may be stably supported by the housing 200 without shaking.

Referring to FIGS. 1 and 2, the battery module abnormality detection device 300 according to an embodiment of the present disclosure may serve to detect an abnormal state of the battery module 100 by using temperature values measured from battery cells, and may include the temperature sensor 310 and the control unit 320.

Referring to FIGS. 1 and 2, the temperature sensor 310 may be connected to the battery module 100 to measure temperature values of the battery cells arranged in the battery group 110.

Referring to FIG. 2, the temperature sensor 310 according to an embodiment of the present disclosure may measure temperature values of a plurality of battery cells provided in one battery module 100.

In some embodiments, the temperature sensor 310 may include a first temperature sensor 311 and a second temperature sensor 312 that are configured to measure a temperature value of each battery cell.

Referring to FIG. 2, the first temperature sensor 311 may measure temperature values of battery cells arranged adjacent to the inlet portion 122a of the coolant pipe 122, and the second temperature sensor 312 may measure temperature values of battery cells arranged adjacent to the outlet portion 122b of the coolant pipe 122. A battery cell may be considered adjacent to the inlet portion 122a if the battery cell is closer to the inlet portion 122a than to the outlet portion 122b with respect to the path formed by the coolant pipe 122, and a battery cell may be considered adjacent to the outlet portion 122b if the battery cell is closer to the outlet portion 122b than to the inlet portion 122a with respect to the path formed by the coolant pipe 122.

In other words, the first temperature sensor 311 may measure temperature values of the battery cells arranged in the inlet area A1, and the second temperature sensor 312 may measure temperature values of the battery cells arranged in the outlet area A2.

Accordingly, when heat is generated in the battery cells due to a charge/discharge test or the like, temperature values obtained by the first temperature sensor 311 measuring temperature values of the battery cells in the inlet area A1 by may be less than temperature values obtained by the second temperature sensor 312 measuring temperature values of the battery cells in the outlet area A2.

Hereinafter, an example will be mainly described in which the temperature sensor 310 measures temperature values of the battery cells closest to the inlet portion 122a and the outlet portion 122b, respectively. That is, the first temperature sensor 311 may measure a temperature value of the first battery cell C1, and the second temperature sensor 312 may measure a temperature value of the fourth battery cell C4.

In this case, a difference between the temperature value measured by the first temperature sensor 311 and the temperature value measured by the second temperature sensor 312 may be maximized, such that the control unit 320 to be described below may easily detect an abnormal state of the battery module 100.

The temperature sensor 310 may deliver the measured temperature values of the battery cells to the control unit 320. The temperature sensor 310 may deliver, to the control unit 320, a temperature value of each battery cell that is measured in real time, so as to allow the control unit 320 to measure a temperature value at a preset time point or to calculate a change amount in temperature values over time.

The temperature sensor 310 may be implemented through a battery management system (BMS). For example, the temperature sensor 310 may be implemented by selecting, from among temperatures of the respective battery cells that are measured by the BMS, temperatures of the battery cells arranged in the inlet area A1 and temperatures of the battery cells arranged in the outlet area A2.

Referring to FIGS. 1 to 3, the control unit 320 may detect an abnormal state of the battery module 100 by using a temperature value measured by the first temperature sensor 311 and a temperature value measured by the second temperature sensor 312.

Referring to FIGS. 1 and 2, the control unit 320 may detect an abnormal state of the battery module 100 by using temperature values measured from at least one battery cell arranged in the inlet area A1 and at least one battery cell arranged in the outlet area A2, respectively.

Referring to FIGS. 2 and 3, the control unit 320 according to an embodiment of the present disclosure may detect an abnormal state of the battery module 100 by using a temperature value of a battery cell that is measured at a preset time point.

A first time point S1 and a second time point S2 for measuring temperatures of the battery cells to detect an abnormal state of the battery module 100 may be arbitrary time points during operation of the battery cells or during a stability test. However, hereinafter, an embodiment will be mainly described in which the first time point S1 and the second time point S2 are at which preset time periods have elapsed after the start of a charge/discharge test on the battery cells, respectively. As shown in Figure 3, the second time point S2 occurs after the first time point S1.

For example, the first time point S1 and the second time point S2 may be preset time points during the first half of the charge/discharge test.

In an embodiment, the control unit 320 may detect an abnormal state of the battery module 100 by using a first difference value, which is a difference between a temperature value measured by the first temperature sensor 311 at a preset time point, and a temperature value measured by the second temperature sensor 312 at the preset time point.

In some embodiments, the control unit 320 may detect an abnormal state of the battery module 100 by using a first difference value, which is a difference between a first temperature value T1 of a battery cell in the inlet area A1 (e.g. the first battery cell C1) and a second temperature value T2 of a battery cell in the outlet area A2 (e.g. the fourth battery cell C4), which are measured at the first time point S1. The difference may be calculated by subtracting the first temperature value T1 from the second temperature value T2.

The control unit 320 may detect an abnormal state of the battery module 100 by comparing the first difference value with at least one reference value that defines a stable range and a dangerous range.

In an embodiment, the control unit 320 may set a first reference temperature value and a second reference temperature value greater than the first reference temperature value that define a stable range and a dangerous range, and determine the state of the battery module 100 as a stable state when the first difference value falls within the stable range, and determine the state of the battery module 100 as an abnormal state when the first difference value falls within the dangerous range.

For example, the control unit 320 may define, as the stable range, a range of greater than or equal to the first reference temperature value but less than or equal to the second reference temperature value, and define, as the dangerous range, a range of less than the first reference temperature value or greater than the second reference temperature value.

Here, the dangerous range may include a first dangerous section corresponding to an abnormal state of the cooling unit 120, and a second dangerous section corresponding to an abnormal state of a battery cell.

In some embodiments, the control unit 320 may define a range of less than the first reference temperature value as the first dangerous section, and a range of greater than the second reference temperature value as the second dangerous section.

When the first difference value falls with the stable range, the control unit 320 may determine that each component of the battery module 100 is operating normally and thus the first battery cell C1 is cooled more than the fourth battery cell C4, and thus determine the state of the battery module 100 as a stable state.

When the first difference value falls within the dangerous range, the control unit 320 may determine that some components of the battery module 100 are operating abnormally, and thus determine the state of the battery module 100 as an abnormal state.

In some embodiments, when the first difference value is less than the first reference temperature value, the control unit 320 may determine that an abnormality, such as a blockage of the coolant pipe 122 of the cooling unit 120, has occurred and thus the first battery cell C1 has not been sufficiently cooled.

Alternatively, when the first difference value is greater than the second reference temperature value, the control unit 320 may determine that a thermal runaway abnormality has occurred in a battery cell other than the first battery cell C1, or that a short circuit has occurred in the first battery cell C1.

The present disclosure is not limited to the above examples, the control unit 320 may determine an abnormal state of the battery module 100 in more detail by using additional reference values.

For example, when the first difference value is less than 0, the control unit 320 may determine that an abnormality, such as thermal runaway, has occurred in the first battery cell C1 and thus the temperature value of the first battery cell C1 is greater than the temperature value of the fourth battery cell C4.

Referring to FIGS. 2 and 3, the control unit 320 according to another embodiment of the present disclosure may detect an abnormal state of the battery module 100 by using a second difference value, which is a difference between respective change amounts in temperature values measured by the first temperature sensor 311 and temperature values measured by the second temperature sensor 312 between the preset first time point S1 and second time point S2. The difference may be calculated by subtracting the change amount in temperature values measured by the first temperature sensor 311 from the change amount in temperature values measured by the second temperature sensor 312.

In some embodiments, the control unit 320 may calculate a first change amount by using the first temperature value T1 of the first battery cell C1 that is measured at the first time point S1, and a third temperature value T3 of the first battery cell C1 that is measured at the second time point S2.

In some embodiments, the control unit 320 may calculate a second change amount by using the second temperature value T2 of the fourth battery cell C4 that is measured at the first time point S1, and a fourth temperature value T4 of the fourth battery cell C4 that is measured at the second time point S2, and detect an abnormal state of the battery module 100 by using a second difference value, which is a difference between the first change amount and the second change amount.

The control unit 320 may detect an abnormal state of the battery module 100 by comparing the second difference value with at least one reference value that defines a stable range and a dangerous range.

In an embodiment, the control unit 320 may set a first reference change amount value and a second reference change amount value greater than the first reference change amount value that define a stable range and a dangerous range, and determine the state of the battery module 100 as a stable state when the second difference value falls within the stable range, and determine the state of the battery module 100 as an abnormal state when the second difference value falls within the dangerous range.

For example, the control unit 320 may define, as the stable range, a range of greater than or equal to the first reference change amount value but less than or equal to the second reference change amount value, and define, as the dangerous range, a range of less than the first reference change amount value or greater than the second reference change amount value.

Here, the dangerous range may include a first dangerous section corresponding to an abnormal state of the cooling unit 120, and a second dangerous section corresponding to an abnormal state of a battery cell.

In some embodiments, the control unit 320 may define a range of less than the first reference change amount value as the first dangerous section, and a range of greater than the second reference change amount value as the second dangerous section.

When the second difference value falls within the stable range, the control unit 320 may determine that each component of the battery module 100 is operating normally and thus the first battery cell C1 is cooled more than the fourth battery cell C4, resulting in a small increase in the temperature value, and thus determine the state of the battery module 100 as a stable state.

When the second difference value falls within the dangerous range, the control unit 320 may determine that some components of the battery module 100 are operating abnormally, and thus determine the state of the battery module 100 as an abnormal state.

In some embodiments, when the second difference value is less than the first reference change amount value, the control unit 320 may determine that an abnormality, such as a blockage of the coolant pipe 122 of the cooling unit 120, has occurred and thus the first battery cell C1 is not sufficiently cooled, resulting in small increases in the temperature values of the first battery cell C1 and the fourth battery cell C4.

Alternatively, when the second difference value is greater than the second reference change amount value, the control unit 320 may determine that a thermal runaway abnormality has occurred in a battery cell other than the first battery cell C1 or that a short circuit has occurred in the first battery cell C1, resulting in a large difference in temperature value change amount between the first battery cell C1 and the fourth battery cell C4.

The present disclosure is not limited to the above examples, the control unit 320 may determine an abnormal state of the battery module 100 in more detail by using additional reference values.

For example, when the second difference value is less than 0, the control unit 320 may determine that an abnormality, such as thermal runaway, has occurred in the first battery cell C1 and thus the temperature value change amount of the first battery cell C1 is greater than the temperature value change amount of the fourth battery cell C4.

Accordingly, the control unit 320 may detect an abnormal state of the cooling unit 120 as well as an abnormal state of a battery cell, without a separate device for measuring the temperature or flow rate of the coolant.

A method by which the control unit 320 uses temperature values measured by the first temperature sensor 311 and the second temperature sensor 312 to detect an abnormal state of the battery module 100 is not limited to the method described above, and various methods by which those of skill in the art may use a temperature behavior of each battery cell to detect an abnormal state of the battery module 100 should all be considered to fall within the scope of the present disclosure.

For example, the control unit 320 may calculate a first slope at a preset time point in a temperature value graph obtained from the first temperature sensor 311, and a second slope at the preset time point from a temperature value graph obtained from the second temperature sensor 312, and determine an abnormal state of the battery module 100 by using a difference between the slopes.

Hereinafter, a battery module abnormality detection device 300' according to another embodiment of the present disclosure will be described.

The battery module abnormality detection device 300' according to another embodiment of the present disclosure has the same configuration and effect as the battery module abnormality detection device 300 according to an embodiment of the present disclosure, except that a temperature measurement target is each battery cell arranged in the plurality of battery modules 100A, 100B, and 100C, except for the specific process of determining an abnormal state of the plurality of battery modules 100A, 100B, and 100C by using measured temperature values, and thus, redundant descriptions will be omitted.

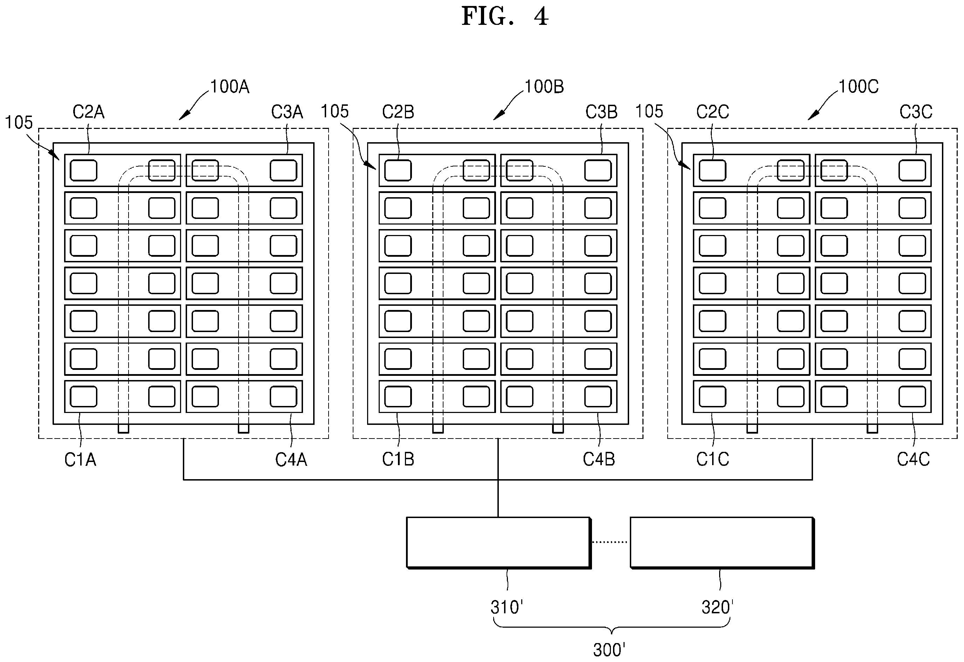

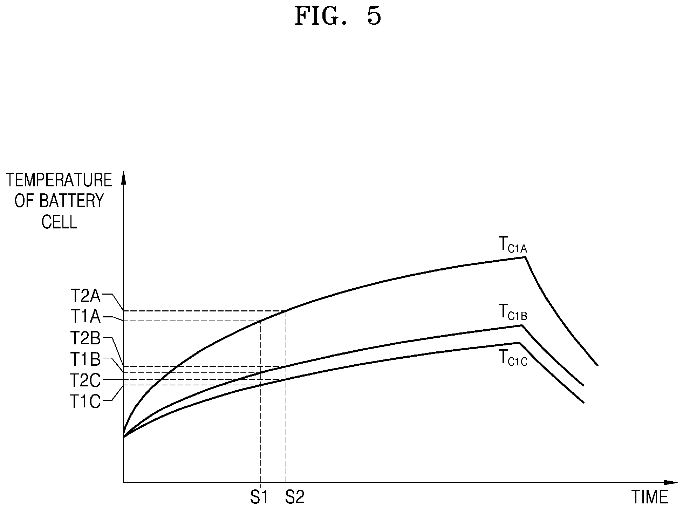

FIG. 4 is a diagram illustrating a battery module abnormality detection device according to another embodiment of the present disclosure, and FIG. 5 is a graph showing temperature changes of some battery cells over time during a charge/discharge test using a plurality of battery modules of FIG. 4.

Referring to FIG. 4, the battery module abnormality detection device 300' according to another embodiment of the present disclosure may include a temperature sensor 310' configured to measure temperature values of battery cells arranged in the plurality of battery modules 100A, 100B, and 100C, and a control unit 320' configured to determine an abnormal state of the battery module 100 by using the measured temperature values.

Although FIG. 4 illustrates three battery modules 100A, 100B, and 100C, the present disclosure is not limited thereto, and the battery module abnormality detection device 300' may be connected to a plurality of battery modules accommodated in the battery pack 10, and may measure temperature values of battery cells arranged in each battery module. However, hereinafter, for convenience of description, an embodiment will be mainly described in which the battery module abnormality detection device 300' uses a temperature value of each battery cell arranged in three battery modules 100A, 100B, and 100C illustrated in FIG. 4.

A plurality of battery cells may be arranged within each of the plurality of battery modules 100A, 100B, and 100C. For example, each of the battery modules 100A, 100B, and 100C may include a first battery cell C1A, C1B, or C1C and a fourth battery cell C4A, C4B, and C4C, and a plurality of battery cells may be arranged therebetween.

Referring to FIG. 4, the temperature sensor 310' according to another embodiment of the present disclosure may measure temperature values of battery cells arranged at corresponding positions on the plurality of battery modules 100A, 100B, and 100C.

For example, the temperature sensor 310' may measure temperature values of the respective first battery cells C1A, C1B, and C1C in the plurality of battery modules 100A, 100B, and 100C. Because the first battery cells C1A, C1B, and C1C are arranged at the positions that are most affected by the coolant, the temperature sensor 310' may easily detect an abnormality in the cooling units of the plurality of battery modules 100A, 100B, and 100C. However, other battery cells within each battery module may be selected for sensing by the temperature sensor 310'. For example, any battery cell within the inlet area A1 of each battery module may be selected for sensing, each battery cell at a corresponding position within each battery module (i.e. the battery cell at the same position within each battery module may be selected for sensing).

Referring to FIGS. 4 and 5, the control unit 320' according to another embodiment of the present disclosure may detect an abnormal state of at least one of the plurality of battery modules 100A, 100B, and 100C by using a temperature value of each battery cell that is delivered from the temperature sensor 310'.

In other words, the control unit 320' may determine an abnormal state of a target battery module that is a target of abnormal state detection, by using a temperature value of each battery cell. However, hereinafter, for convenience of description, an embodiment will be mainly described in which an abnormal state of the first battery module 100A is detected by using temperature values of the battery cells arranged in the plurality of battery modules 100A, 100B, and 100C.

Referring to FIG. 5, the control unit 320' may detect an abnormal state of the battery module by using a first difference value, which is a difference between an average temperature value calculated from temperature values of the respective battery cell that are measured at a preset time point, and a temperature value of a selected battery cell provided in a preset battery module from among the plurality of battery modules 100A, 100B, and 100C. The selected battery cell in the preset module may be one of the battery cells that was sensed in determining the average temperature value. The difference may be calculated by subtracting the average temperature value from the temperature value of the selected battery cell.

In an embodiment, the control unit 320' may calculate an average temperature value by using a first cell temperature value T1A of the first battery cell C1A in the first battery module 100A, a second cell temperature value T1B of the first battery cell C1B in the second battery module 100B, and a third cell temperature value T1C of the first battery cell C1C in the third battery module 100C, which are measured at the first time point S1.

The control unit 320' may detect an abnormal state of the battery module 100 by using a first difference value, which is a difference between the average temperature value and the first cell temperature value T1A of the first battery module 100A.

The control unit 320 may detect an abnormal state of the battery module 100 by comparing the first difference value with at least one reference value that defines a stable range and a dangerous range. The abnormal state may be identified as an abnormal state of the battery module and optionally more specifically an abnormal state of the selected battery cell of the preset battery module.

In an embodiment, the control unit 320' may set a first reference temperature value and a second reference temperature value greater than the first reference temperature value that define a stable range and a dangerous range, and determine the state of the battery module 100 as a stable state when the first difference value falls within the stable range, and determine the state of the battery module 100 as an abnormal state when the first difference value falls within the dangerous range.

For example, the control unit 320' may define, as the stable range, a range of less than or equal to the first reference temperature value, and define, as the dangerous range, a range of greater than the first reference temperature value.

Here, the dangerous range may include a first dangerous section corresponding to an abnormal state of the cooling unit 120, and a second dangerous section corresponding to an abnormal state of a battery cell.

In some embodiments, the control unit 320' may define a range of greater than the first reference temperature value but less than or equal to the second reference temperature value as the first dangerous section, and a range of greater than the second reference temperature value as the second dangerous section.

When the first difference value falls within the stable range, the control unit 320' may determine the state of the first battery module 100A as a stable state. In other words, the control unit 320' may determine that each component of the first battery module 100A is operating normally and thus the first battery cell C1A of the first battery module 100A has a temperature behavior similar to those of the first cells C1B and C1C of the second battery module 100B and the third battery module 100C.

When the first difference value falls within the dangerous range, the control unit 320' may determine the state of the first battery module 100A as an abnormal state. In other words, the control unit 320' may determine that some components of the first battery module 100A are operating abnormally, and thus determine the state of the first battery module 100A as an abnormal state.

In some embodiments, when the first difference value is greater than the first reference temperature value but less than or equal to the second reference temperature value, the control unit 320' may determine that an abnormality has occurred in the cooling unit of the first battery module 100A, such as a blockage of the coolant pipe.

Alternatively, when the first difference value is greater than the second reference temperature value, the control unit 320' may determine that an abnormality, such as thermal runaway, has occurred in the first battery cell C1A.

Referring to FIG. 5, the control unit 320' according to another embodiment of the present disclosure may detect an abnormal state of a battery module by using a second difference value, which is a difference between temperature value change amounts of battery cells provided in a preset battery module from among the plurality of battery modules 100A, 100B, and 100C, between the preset first time point S1 and second time point S2.

In some embodiments, the control unit 320' may calculate a first cell change amount by using the first cell temperature value T1A and a second cell temperature value T1B of the first battery cell C1A provided in the first battery module 100A that are respectively measured at the first time point S1 and the second time point S2.

In the same manner, the control unit 320' may calculate a second cell change amount and a third cell change amount by using a first cell temperature value T1B of the first battery cell C1B provided in the second battery module 100B, a second cell temperature value T2B of the first battery cell C1B provided in the second battery module 100B, a first cell temperature value T1C of the first battery cell C1C provided in the third battery module 100C, and a second cell temperature value T2C of the first battery cell C1C provided in the third battery module 100C, the first cell temperature values T1B and T1C being measured at the first time point S1 and the second cell temperature values being T2B and T2C measured at the second time point S2. Each of the first to third cell change amounts may be determined by subtracting the first cell temperature value from the second cell temperature value for the corresponding battery cell. For example, the first cell change amount may be calculated by subtracting the first cell temperature value T1A from the second cell temperature value T1B.

The control unit 320' may calculate an average change amount by using the first to third cell change amounts, and detect an abnormal state of the battery module 100 by using a second difference value, which is a difference between the average change amount and the first cell change amount. The second difference value may be calculated by subtracting the average change amount from the first cell change amount. The difference may alternatively be calculated by subtracting the average change amount from the second cell change amount, or from the third cell change amount to determine anomalous behaviour in the second battery module 100B or the third battery module 100C respectively.

The control unit 320 may detect an abnormal state of the battery module 100 by comparing the second difference value with at least one reference value that defines a stable range and a dangerous range.

In an embodiment, the control unit 320' may set a first reference change amount value and a second reference change amount value greater than the first reference change amount value that define a stable range and a dangerous range, and determine the state of the battery module 100 as a stable state when the second difference value falls within the stable range, and determine the state of the battery module 100 as an abnormal state when the second difference value falls within the dangerous range.

For example, the control unit 320' may define, as the stable range, a range of less than or equal to the first reference change amount value, and define, as the dangerous range, a range of greater than the first reference change amount value.

Here, the dangerous range may include a first dangerous section corresponding to an abnormal state of the cooling unit 120, and a second dangerous section corresponding to an abnormal state of a battery cell.

In some embodiments, the control unit 320' may define a range of greater than the first reference change amount value but less than or equal to the second reference change amount value as the first dangerous section, and a range of greater than the second reference change amount value as the second dangerous section.

When the second difference value falls within the stable range, the control unit 320' may determine that each configuration of the first battery module 100A is operating normally and thus the first battery cell C1A of the first battery module 100A has a temperature behavior similar to those of the first cells C1B and C1C of the second battery module 100B and the third battery module 100C.

When the second difference value falls within the dangerous range, the control unit 320' may determine that some components of the first battery module 100A are operating abnormally, and thus determine the state of the first battery module 100A as an abnormal state.

In some embodiments, when the second difference value is greater than the first reference change amount value but less than or equal to the second reference change amount value, the control unit 320' may determine that an abnormality has occurred in the cooling unit of the first battery module 100A, such as a blockage of the coolant pipe.

Alternatively, when the second difference value is greater than the second reference temperature value, the control unit 320' may determine that an abnormality, such as thermal runaway, has occurred in the first battery cell C1A.

Accordingly, the control unit 320' may detect an abnormal state of the cooling unit 120 as well as an abnormal state of a battery cell, without a separate device for measuring the temperature or flow rate of the coolant.

Hereinafter, a battery module abnormality detection method according to an embodiment of the present disclosure will be described.

In the specification, a process of detecting an abnormal state of a battery module is described in a time-series manner for convenience of description, and the process and each operation to be described below are not limited to their order of description and may be performed simultaneously.

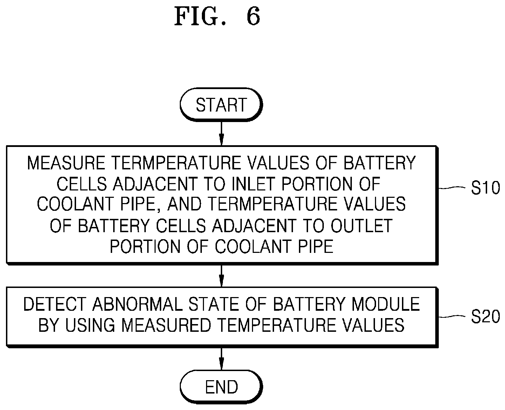

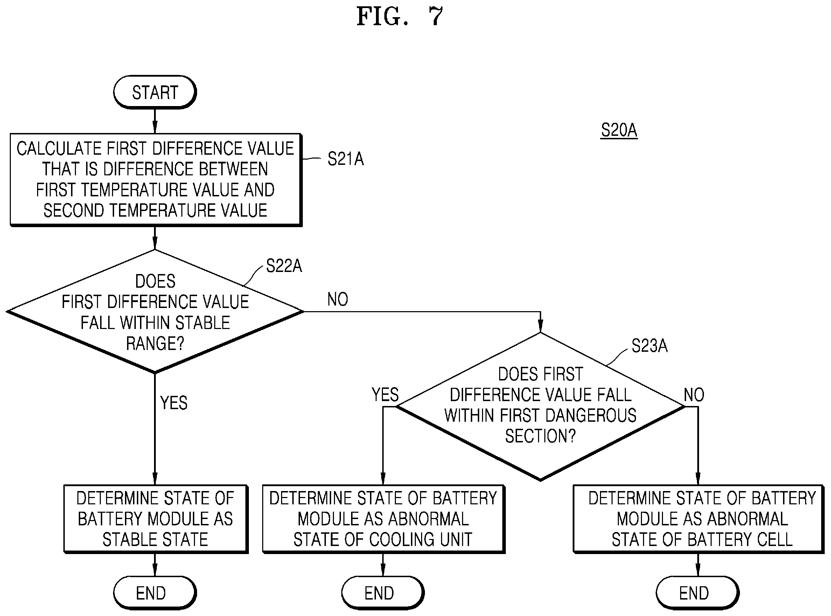

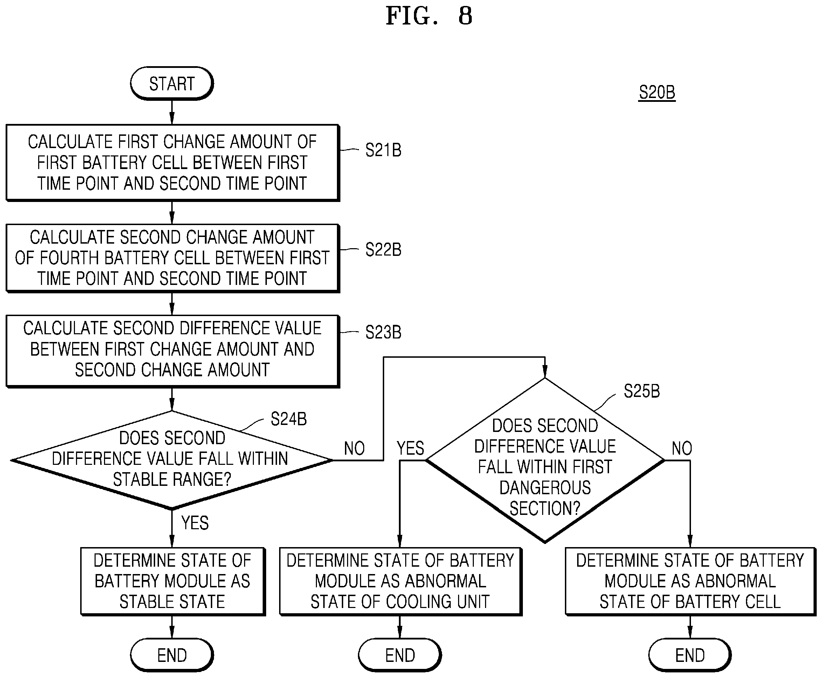

FIG. 6 is a flowchart showing a battery module abnormality detection method according to an embodiment of the present disclosure, FIG. 7 is a flowchart showing in detail some operations of the battery module abnormality detection method of FIG. 6, and FIG. 8 is a flowchart showing in detail another embodiment of some operation of the battery module abnormality detection method of FIG. 6.

Referring to FIG. 6, a battery module abnormality detection method according to an embodiment of the present disclosure may include measuring temperature values of battery cells (S10) and detecting an abnormal state of a battery module (S20).

In the measuring of the temperature values of the battery cells (S10), the temperature values of the battery cells may be measured by using the temperature sensor 310.

Referring to FIG. 2, the first temperature sensor 311 may measure a temperature value of any one of the plurality of battery cells arranged in the inlet portion 122a of the battery group 110, and the second temperature sensor 312 may measure a temperature value of any one of the plurality of battery cells arranged in the outlet portion 122b of the battery group 110.

In an embodiment, the first temperature sensor 311 may measure a temperature value of the first battery cell C1, and the second temperature sensor 312 may measure a temperature value of the fourth battery cell C4.

The temperature sensor 310 may measure a temperature value of each battery cell at the preset first time point S1, or may measure a temperature value of each battery cell at each of the first time point S1 and the second time point S2.

In the detecting of the abnormal state of the battery module, the abnormal state of the battery module may be detected by using a difference between temperature values of battery cells or a difference between change amounts in the temperature values.

Referring to FIG. 7, detecting an abnormal state of a battery module (S20A) according to an embodiment of the present disclosure may include calculating a first difference value (S21A), determining whether the first difference value falls within a stable range (S22A), and determining whether the first difference value falls within a first dangerous section (S23A).

In the calculating of the first difference value (S21A), the first difference, which is a difference between a temperature value measured by the first temperature sensor 311 and a temperature value measured by the second temperature sensor 312, may be calculated.

Referring to FIGS. 2 and 3, the first temperature sensor 311 may measure the first temperature value T1 of the first battery cell C1 at the first time point S1, and the second temperature sensor 312 may measure the second temperature value T2 of the fourth battery cell C4 at the second time point S2.

Referring to FIGS. 2 and 3, the control unit 320 may receive the first temperature value T1 and the second temperature value T2 from the temperature sensor 310, and calculate a first difference value, which is a difference between them.

In the determining whether the first difference value falls within the stable range (S22A), the stable state of the battery module may be determined by using the first difference value.

The control unit 320 may set a first reference temperature value and a second reference temperature value greater than the first reference temperature value that define the stable range, and define, as the stable range, a range of greater than or equal to the first reference temperature value but less than or equal to the second reference temperature value.

Here, when the control unit 320 determines that the first difference value falls within the stable range, the control unit 320 may determine the state of the battery module 100 as a stable state.

When the control unit 320 determines that the first difference value does not fall within the stable range, the control unit 320 may proceed to the determining whether the first difference value falls within the first dangerous section (S23A).

In the determining whether the first difference value falls within the first dangerous section (S23A), an abnormal state of the battery module may be detected by using the first difference value.

The control unit 320 may define a range of less than the first reference temperature value as the first dangerous section, and a range of greater than the second reference temperature value as a second dangerous section.

Here, the first dangerous section may be a dangerous range corresponding to an abnormal state of the cooling unit 120, and the second dangerous section may be a dangerous range corresponding to an abnormal state of a battery cell.

Accordingly, in the determining whether the first difference value falls within the first dangerous section (S23A), when it is determined that the first difference value falls within the first dangerous section, the state of the battery module 100 may be determined as an abnormal state of the cooling unit 120, and when it is determined that the first difference value does not fall within the first dangerous section, the state of the battery module 100 may be determined as an abnormal state of the battery cell.

Referring to FIG. 8, detecting an abnormal state of a battery module (S20B) according to another embodiment of the present disclosure may include calculating a first change amount (S21B), calculating a second change amount (S22B), calculating a second difference value (S23B), determining whether the second difference value falls within a stable range (S24B), and determining whether the second difference value falls within a first dangerous section (S25B).

In the calculating of the first change amount (S21B), a change amount in temperature values of battery cells measured by the first temperature sensor may be calculated.

Referring to FIGS. 2 and 3, the control unit 320 may calculate a first change amount by using the first temperature value T1 of the first battery cell C1 that is measured at the first time point S1, and a third temperature value T3 of the first battery cell C1 that is measured at the second time point S2.

In the calculating of the second change amount (S22B), a change amount in temperature values of battery cells measured by the second temperature sensor may be calculated.

Referring to FIGS. 2 and 3, the control unit 320 may calculate a second change amount by using the second temperature value T2 of the fourth battery cell C4 that is measured at the first time point S1, and the fourth temperature value T4 of the fourth battery cell C4 that is measured at the second time point S2.

In the calculating of the second difference value (S23B), the second difference value may be calculated, which is a difference between the first change amount calculated in the calculating of the first change amount (S21B), and the second change amount calculated in the calculating of the second change amount (S22B).

In the determining whether the second difference value falls within the stable range (S24B), the stable state of the battery module may be determined by using the second difference value.

The control unit 320 may set a first reference change amount value and a second reference change amount value that define the stable range, and define, as the stable range, a range of greater than or equal to the first reference change amount value but less than or equal to the second reference change amount value.

Here, when the control unit 320 determines that the second difference value falls within the stable range, the control unit 320 may determine the state of the battery module 100 as a stable state.

When the control unit 320 determines that the second difference value does not fall within the stable range, the control unit 320 may proceed to the determining whether the second difference value falls within the first dangerous section (S25B).

In the determining whether the second difference value falls within the first dangerous section (S25B), an abnormal state of the battery module may be detected by using the second difference value.

The control unit 320 may define a range of less than the first reference change amount value as the first dangerous section, and a range of greater than the second reference change amount value as a second dangerous section.

Here, the first dangerous section may be a dangerous range corresponding to an abnormal state of the cooling unit 120, and the second dangerous section may be a dangerous range corresponding to an abnormal state of a battery cell.

Accordingly, in the determining whether the second difference value falls within the first dangerous section (S25B), when it is determined that the second difference value falls within the first dangerous section, the state of the battery module 100 may be determined as an abnormal state of the cooling unit 120, and when it is determined that the second difference value does not fall within the first dangerous section, the state of the battery module 100 may be determined as an abnormal state of the battery cell.

Hereinafter, a battery module abnormality detection method according to another embodiment of the present disclosure will be described.

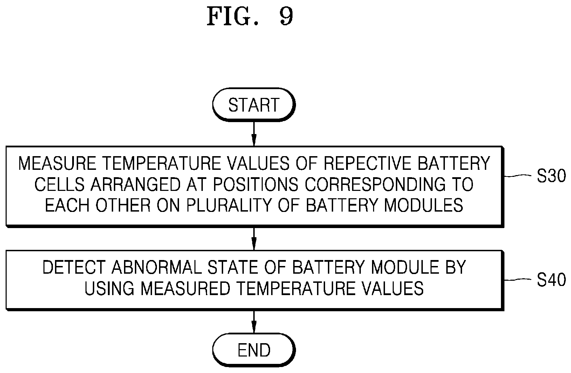

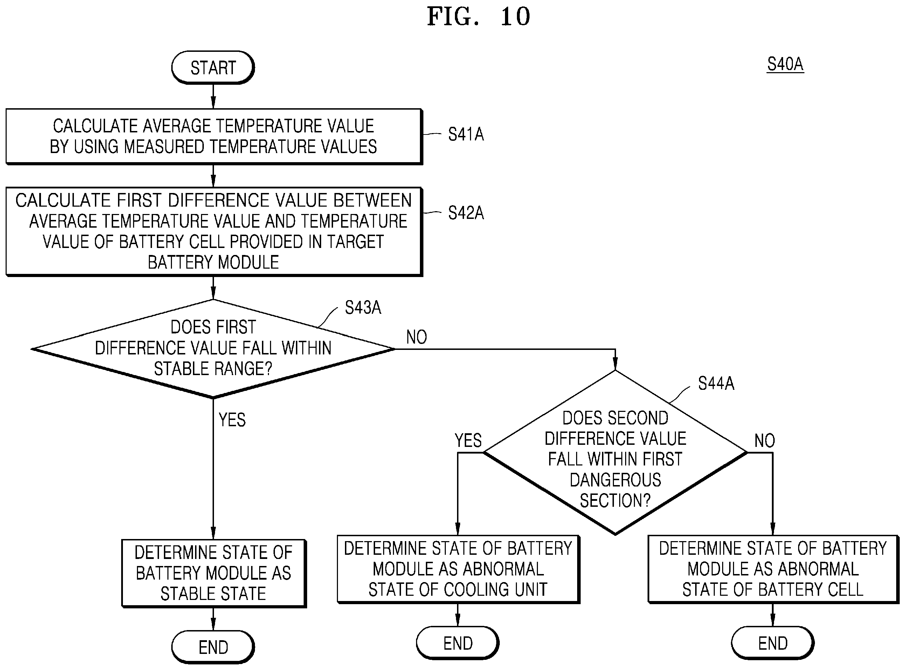

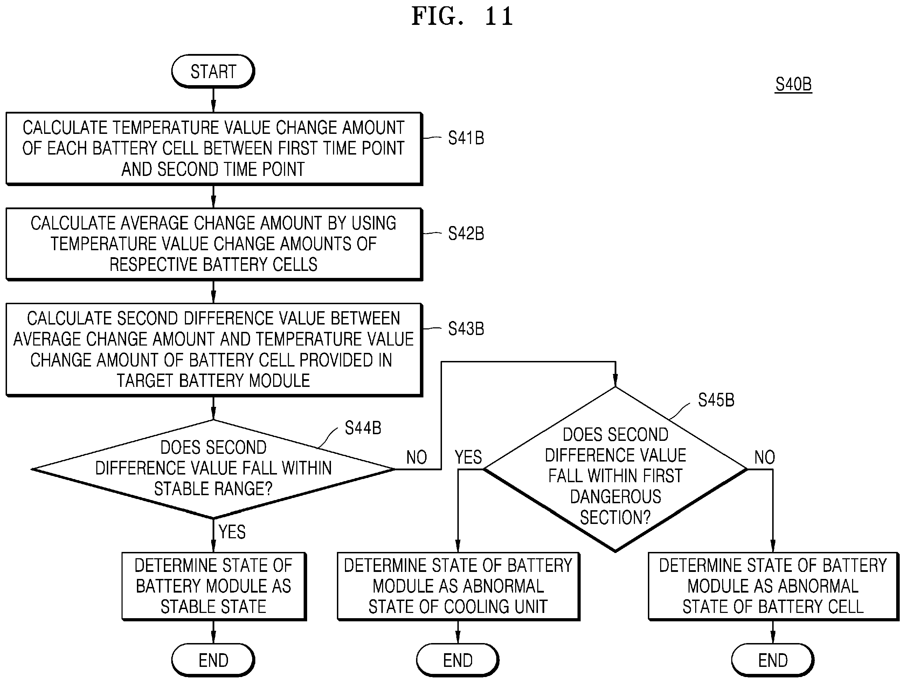

FIG. 9 is a flowchart showing another embodiment of the battery module abnormality detection method of FIG. 6, FIG. 10 is a flowchart showing in detail some operations of the battery module abnormality detection method of FIG. 9, and FIG. 11 is a flowchart showing in detail another embodiment of some operations of the battery module abnormality detection method of FIG. 9.

Referring to FIG. 9, a battery module abnormality detection method according to another embodiment of the present disclosure may include measuring temperature values of battery cells (S30) and detecting an abnormal state of a battery module (S40).

In the measuring of the temperature values of the battery cells (S30), temperature values of battery cells arranged in a plurality of battery modules may be measured by using the temperature sensor 310.

Referring to FIG. 4, the temperature sensor 310' may measure temperature values of battery cells arranged at corresponding positions on the plurality of battery modules 100A, 100B, and 100C.

For example, the temperature sensor 310 may measure temperature values of the respective first battery cells C1A, C1B, and C1C in the plurality of battery modules 100A, 100B, and 100C.

In the detecting of the abnormal state of the battery module (S40), an abnormal state of the battery module may be detected by using a difference in the temperature values of the respective first battery cells C1A, C1B, and C1C provided in the plurality of battery modules 100A, 100B, and 100C, or by using a difference between change amounts in the temperature values.

Referring to FIG. 10, detecting an abnormal state of a battery module (S40A) according to another embodiment of the present disclosure may include calculating an average temperature value (S41A), calculating a first difference value (S42A), and determining whether the first difference value falls within a stable range (S43A).

In the calculating of the average temperature value (S41A), the average temperature value may be calculated by using temperature values of battery cells arranged in the plurality of battery modules 100A, 100B, and 100C.

Referring to FIGS. 4 and 5, the control unit 320' may calculate an average temperature value by using the first cell temperature value T1A of the first battery cell C1A in the first battery module 100A, the second cell temperature value T1B of the first battery cell C1B in the second battery module 100B, and the third cell temperature value T1C of the first battery cell C1C in the third battery module 100C, which are measured at the first time point S1.

In the calculating of the first difference value (S42A), the first difference value may be calculated, which is a difference between the average temperature value calculated in the calculating of the average temperature value (S41A), and a temperature value of a battery cell provided in a target battery module.

In other words, in the calculating of the first difference value (S42A), the first difference value may be calculated, which is the difference between the average temperature value and the temperature value of the battery cell provided in the target battery module that is a target of detection of an abnormal state.

Referring to FIGS. 4 and 5, the control unit 320' may calculate the first difference value, which is a difference between the average temperature value and the first cell temperature value T1A of the first battery module 100A.

In the determining whether the first difference value falls within the stable range (S43A), the stable state of the battery module may be determined by using the first difference value.

The control unit 320' may set a first reference temperature value that defines the stable range, and define a range of less than or equal to the first reference temperature value as the stable range.

When it is determined that the first difference value falls within the stable range, the control unit 320' may determine the state of the battery module as a stable state.

When the control unit 320' determines that the first difference value does not fall within the stable range, the control unit 320 may proceed to the determining whether the first difference value falls within the first dangerous section (S44A).

In the determining whether the first difference value falls within the first dangerous section (S44A), an abnormal state of the battery module may be detected by using the first difference value.

The control unit 320' may set a second reference temperature value that defines the first dangerous section and a second dangerous section.

The control unit 320' may define a range of greater than the first reference temperature value but less than or equal to the second reference temperature value as the first dangerous section, and a range of greater than the second reference temperature value as the second dangerous section.

Here, the first dangerous section may be a dangerous range corresponding to an abnormal state of the cooling unit 120, and the second dangerous section may be a dangerous range corresponding to an abnormal state of a battery cell.

Accordingly, in the determining whether the first difference value falls within the first dangerous section (S44A), when it is determined that the first difference value falls within the first dangerous section, the state of the battery module 100 may be determined as an abnormal state of the cooling unit, and when it is determined that the first difference value does not fall within the first dangerous section, the state of the battery module 100 may be determined as an abnormal state of a battery cell.

Referring to FIG. 11, detecting an abnormal state of a battery module (S40B) according to another embodiment of the present disclosure may include calculating a temperature value change amount (S41B), calculating an average change amount (S42B), calculating a second difference value (S43B), determining whether the second difference value falls within a stable range (S44B), and determining whether the second difference value falls within a first dangerous section (S45B).

In the calculating of the temperature value change amount (S41B), a temperature value change amount of each of the first battery cells C1A, C1B, and C1C provided in the plurality of battery modules 100A, 100B, and 100C may be calculated.

Referring to FIGS. 4 and 5, the control unit 320' may calculate a first cell change amount by using the first cell temperature value T1A and the second cell temperature value T1B of the first battery cell C1A of the first battery module 100A that are respectively measured at the first time point S1 and the second time point S2. In the same manner, the control unit 320' may calculate a second cell change amount and a third cell change amount by using the first cell temperature values T1B and T1C and the second cell temperature values T2B and T2C of the first cells C1B and C1C of the second battery module and the third battery module, respectively, which are measured at the first time point S1 and the second time point S2.

In the calculating of the average change amount (S42B), an average change amount of temperature value change amounts of the respective first battery cells C1A, C1B, and C1C provided in the plurality of battery modules 100A, 100B, and 100C may be calculated.

Referring to FIG. 5, the control unit 320' may calculate an average change amount by using first to third cell change amounts calculated in the calculating of the temperature value change amount (S41B).

In the calculating of the second difference value (S43B), the second difference value may be calculated, which is a difference between the average change amount calculated in the calculating of the average change amount (S42B), and a change amount of a battery cell provided in a target battery module.

In other words, in the calculating of the second difference value (S43B), the second difference value may be calculated, which is the difference between the average change amount and the change amount of the battery cell provided in the target battery module that is a target of detection of an abnormal state.

Referring to FIGS. 4 and 5, the control unit 320' may calculate the second difference value, which is a difference between the average change amount and a first change amount of the first battery module 100A.

In the determining whether the second difference value falls within the stable range (S44B), the stable state of the battery module may be determined by using the second difference value.

The control unit 320' may set a first reference change amount value that defines the stable range, and define a range of less than or equal to the first reference change amount value as the stable range.

When it is determined that the second difference value falls within the stable range, the control unit 320' may determine the state of the battery module as a stable state.

When the control unit 320' determines that the second difference value does not fall within the stable range, the control unit 320' may proceed to the determining whether the second difference value falls within the first dangerous section (S45B).

In the determining whether the second difference value falls within the first dangerous section (S45B), an abnormal state of the battery module may be detected by using the second difference value.

The control unit 320' may set a second reference change amount value that defines the first dangerous section and a second dangerous section.

The control unit 320' may define a range of greater than the first reference change amount value but less than or equal to the second reference change amount value as the first dangerous section, and a range of greater than the second reference change amount value as the second dangerous section.

Here, the first dangerous section may be a dangerous range corresponding to an abnormal state of the cooling unit 120, and the second dangerous section may be a dangerous range corresponding to an abnormal state of a battery cell.

Accordingly, in the determining whether the second difference value falls within the first dangerous section (S45B), when it is determined that the second difference value falls within the first dangerous section, the state of the battery module 100 may be determined as an abnormal state of the cooling unit, and when it is determined that the second difference value does not fall within the first dangerous section, the state of the battery module 100 may be determined as an abnormal state of a battery cell.

A battery module abnormality detection device and method according to an embodiment of the present disclosure may measure temperature values of battery cells provided in a battery module without a separate device, and detect an abnormality in a cooling unit and a battery cell by using the measured temperature values and their behavior. Without requiring a separate device, the cost and weight of the battery module assembly can be reduced. Furthermore, abnormalities (such as a flow path blockage) can be more easily detected (either in operation or during the production stage).

According to embodiments of the present disclosure, abnormal states of a cooling system or a battery cell of a battery module may be easily detected.

In addition, it is possible to detect abnormal states of a cooling system or a battery cell without adding a separate device such as a flow meter to a battery module.

However, the effects of the present disclosure are not limited to the foregoing, and other unmentioned effects would be clearly understood by those of skill in the art from the following description.

The scope of the present disclosure should not be limited to the above-described embodiments, and all modifications and variations which may be derived from the meanings, scopes and equivalents of the claims should be construed as failing within the scope of the present disclosure.

Although the present disclosure has been described above by means of limited embodiments and drawings, the present disclosure is not limited thereto, and various modifications and variations are possible by those of skill in the art without departing from the scope of the present disclosure and equivalents of the appended claims.
Further Embodiments are set out in the following clauses:
Clause 1. A battery module abnormality detection device for detecting an abnormality in a battery module, the battery module comprising:
   a battery group in which a plurality of battery cells are arranged; and
   a cooling unit comprising a coolant pipe arranged on one surface of the battery group to extend in a direction in which the plurality of battery cells are arranged,
   wherein the battery module abnormality detection device comprises:
      a first temperature sensor configured to measure temperature values of battery cells arranged adjacent to an inlet portion of the coolant pipe;
      a second temperature sensor configured to measure temperature values of battery cells arranged adjacent to an outlet portion of the coolant pipe; and
      a control unit configured to detect an abnormal state of the battery module by using the temperature values measured by the first temperature sensor and the temperature values measured by the second temperature sensor.
Clause 2. The battery module abnormality detection device of clause 1, wherein the control unit is further configured to detect the abnormal state of the battery module by using a first difference value, which is a difference between a temperature value measured by the first temperature sensor at a preset time point, and a temperature value measured by the second temperature sensor at a preset time point.
Clause 3. The battery module abnormality detection device of clause 2, wherein the control unit is further configured to detect the abnormal state of the battery module by comparing the first difference value with at least one reference value that defines a stable range or a dangerous range, determine, based on the first difference value falling within the stable range, a state of the battery module as a stable state, and determine, based on the first difference value falling within the dangerous range, the state of the battery module as an abnormal state.
Clause 4. The battery module abnormality detection device of clause 3, wherein the dangerous range comprises a first dangerous section corresponding to an abnormal state of the cooling unit, and a second dangerous section corresponding to an abnormal state of the battery cells.
Clause 5. The battery module abnormality detection device of any preceding clause, wherein the control unit is further configured to detect the abnormal state of the battery module by using a second difference value, which is a difference between a change amount in temperature values measured by the first temperature sensor between a preset first time point and a preset second time point, and a change amount in temperature values measured by the second temperature sensor between the first time point and the second time point.
Clause 6. The battery module abnormality detection device of clause 5, wherein the control unit is further configured to detect the abnormal state of the battery module by comparing the second difference value with at least one reference value that defines a stable range or a dangerous range, determine, based on the second difference value falling within the stable range, a state of the battery module as a stable state, and determine, based on the second difference value falling within the dangerous range, the state of the battery module as an abnormal state.
Clause 7. The battery module abnormality detection device of clause 6, wherein the dangerous range comprises a first dangerous section corresponding to an abnormal state of the battery cell, and a second dangerous section corresponding to an abnormal state of the cooling unit.
Clause 8. A battery module abnormality detection device for detecting an abnormality in a battery module, the battery module comprising:
   a battery group in which a plurality of battery cells are arranged; and
   a cooling unit comprising a coolant pipe arranged on one surface of the battery group to extend in a direction in which the plurality of battery cells are arranged,
   wherein the battery module abnormality detection device comprises:
      a temperature sensor configured to measure temperature values of battery cells arranged at corresponding positions on the plurality of battery modules; and
      a control unit configured to detect an abnormal state of at least one of the plurality of battery modules by using the temperature values.
Clause 9. The battery module abnormality detection device of clause 8, wherein the control unit is further configured to detect an abnormal state of the battery module by using a first difference value, which is a difference between an average temperature value calculated from the temperature values measured at a preset time point and a temperature value of a battery cell provided in a preset battery module from among the plurality of battery modules.
Clause 10. The battery module abnormality detection device of clause 9, wherein the control unit is further configured to detect the abnormal state of the battery module by comparing the first difference value with at least one reference value that defines a stable range or a dangerous range, determine, based on the first difference value falling within the stable range, a state of the battery module as a stable state, and determine, based on the first difference value falling within the dangerous range, the state of the battery module as an abnormal state.
Clause 11. The battery module abnormality detection device of clause 10, wherein the dangerous range comprises a first dangerous section corresponding to an abnormal state of the cooling unit, and a second dangerous section corresponding to an abnormal state of the battery cells.
Clause 12. The battery module abnormality detection device of any one of clauses 8 - 11, wherein the control unit is further configured to detect the abnormal state of the battery module by using a second difference value, which is a difference between an average change amount calculated by using change amounts in the temperature values between a preset first time point and a preset second time point, and a temperature value change amount of a battery cell provided in a preset battery module from among the plurality of battery modules between the first time point and the second time point.
Clause 13. The battery module abnormality detection device of clause 12, wherein the control unit is further configured to detect the abnormal state of the battery module by comparing the second difference value with at least one reference value that defines a stable range or a dangerous range, determine, based on the second difference value falling within the stable range, a state of the battery module as a stable state, and determine, based on the second difference value falling within the dangerous range, the state of the battery module as an abnormal state.
Clause 14. The battery module abnormality detection device of clause 13, wherein the dangerous range comprises a first dangerous section corresponding to an abnormal state of the cooling unit, and a second dangerous section corresponding to an abnormal state of the battery cells.
Clause 15. A battery pack comprising:
   a battery module comprising a battery group in which a plurality of battery cells are arranged, and a cooling unit comprising a coolant pipe arranged on one surface of the battery group to extend in a direction in which the plurality of battery cells are arranged; and
   a battery module abnormality detection device,
   wherein the battery module abnormality detection device comprises:
      a first temperature sensor configured to measure temperature values of battery cells arranged adjacent to an inlet portion of the coolant pipe;
      a second temperature sensor configured to measure temperature values of battery cells arranged adjacent to an outlet portion of the coolant pipe; and
         a control unit configured to detect an abnormal state of the battery module by using the temperature values measured by the first temperature sensor and the temperature values measured by the second temperature sensor.

## Claims

1. A battery module abnormality detection device for detecting an abnormality in a battery module, the battery module comprising:
a battery group in which a plurality of battery cells are arranged; and
a cooling unit comprising a coolant pipe arranged on one surface of the battery group to extend in a direction in which the plurality of battery cells are arranged,
wherein the battery module abnormality detection device comprises:
a first temperature sensor configured to measure a temperature value of a battery cell arranged adjacent to an inlet portion of the coolant pipe;
a second temperature sensor configured to measure a temperature value of a battery cell arranged adjacent to an outlet portion of the coolant pipe; and
a control unit configured to detect an abnormal state of the battery module by using the temperature value measured by the first temperature sensor and the temperature value measured by the second temperature sensor.

2. The battery module abnormality detection device of claim 1, wherein the control unit is further configured to detect the abnormal state of the battery module by using a first difference value, which is a difference between a temperature value measured by the first temperature sensor at a preset time point, and a temperature value measured by the second temperature sensor at the preset time point.

3. The battery module abnormality detection device of claim 2, wherein the control unit is further configured to detect the abnormal state of the battery module by comparing the first difference value with at least one reference value that defines a stable range or a dangerous range, determine, based on the first difference value falling within the stable range, a state of the battery module as a stable state, and determine, based on the first difference value falling within the dangerous range, the state of the battery module as an abnormal state.

4. The battery module abnormality detection device of claim 3, wherein the dangerous range comprises a first dangerous section corresponding to an abnormal state of the cooling unit, and a second dangerous section corresponding to an abnormal state of a battery cell.

5. The battery module abnormality detection device of any preceding claim, wherein the control unit is further configured to detect the abnormal state of the battery module by using a second difference value, which is a difference between a change amount in temperature values measured by the first temperature sensor between a preset first time point and a preset second time point, and a change amount in temperature values measured by the second temperature sensor between the first time point and the second time point.

6. The battery module abnormality detection device of claim 5, wherein the control unit is further configured to detect the abnormal state of the battery module by comparing the second difference value with at least one reference value that defines a stable range or a dangerous range, determine, based on the second difference value falling within the stable range, a state of the battery module as a stable state, and determine, based on the second difference value falling within the dangerous range, the state of the battery module as an abnormal state.

7. The battery module abnormality detection device of claim 6, wherein the dangerous range comprises a first dangerous section corresponding to an abnormal state of a battery cell, and a second dangerous section corresponding to an abnormal state of the cooling unit.

8. A battery module abnormality detection device for detecting an abnormality in at least one of a plurality of battery modules, each battery module comprising:
a battery group in which a plurality of battery cells are arranged; and
a cooling unit comprising a coolant pipe arranged on one surface of the battery group to extend in a direction in which the plurality of battery cells are arranged,
wherein the battery module abnormality detection device comprises:
a temperature sensor configured to measure temperature values of battery cells arranged at corresponding positions on the plurality of battery modules; and
a control unit configured to detect an abnormal state of at least one of the plurality of battery modules by using the temperature values.

9. The battery module abnormality detection device of claim 8, wherein the control unit is further configured to detect an abnormal state of the battery module by using a first difference value, which is a difference between an average temperature value calculated from the temperature values measured at a preset time point and a temperature value of a battery cell provided in a preset battery module from among the plurality of battery modules.

10. The battery module abnormality detection device of claim 9, wherein the control unit is further configured to detect the abnormal state of the battery module by comparing the first difference value with at least one reference value that defines a stable range or a dangerous range, determine, based on the first difference value falling within the stable range, a state of the battery module as a stable state, and determine, based on the first difference value falling within the dangerous range, the state of the battery module as an abnormal state.

11. The battery module abnormality detection device of claim 10, wherein the dangerous range comprises a first dangerous section corresponding to an abnormal state of the cooling unit, and a second dangerous section corresponding to an abnormal state of a battery cell.

12. The battery module abnormality detection device of any one of claims 8 - 11, wherein the control unit is further configured to detect the abnormal state of the battery module by using a second difference value, which is a difference between an average change amount calculated by using change amounts in the temperature values between a preset first time point and a preset second time point, and a temperature value change amount of a battery cell provided in a preset battery module from among the plurality of battery modules between the first time point and the second time point.

13. The battery module abnormality detection device of claim 12, wherein the control unit is further configured to detect the abnormal state of the battery module by comparing the second difference value with at least one reference value that defines a stable range or a dangerous range, determine, based on the second difference value falling within the stable range, a state of the battery module as a stable state, and determine, based on the second difference value falling within the dangerous range, the state of the battery module as an abnormal state,
wherein, optionally, the dangerous range comprises a first dangerous section corresponding to an abnormal state of the cooling unit, and a second dangerous section corresponding to an abnormal state of a battery cell.

14. A battery pack comprising:
a battery module comprising a battery group in which a plurality of battery cells are arranged, and a cooling unit comprising a coolant pipe arranged on one surface of the battery group to extend in a direction in which the plurality of battery cells are arranged; and
a battery module abnormality detection device according to any one of claims 1 - 7.

15. A battery pack comprising:
a plurality of battery modules, each battery module comprising a battery group in which a plurality of battery cells are arranged and a cooling unit comprising a coolant pipe arranged on one surface of the battery group to extend in a direction in which the plurality of battery cells are arranged; and
a battery module abnormality detection device according to any one of claims 8 - 13.
